# EUROPÄISCHE PATENTSCHRIFT

(11) **EP 0 498 192 B1**
(45) Veröffentlichungstag und Bekanntmachung des Hinweises auf die Patenterteilung: **14.06.1995**
(21) Anmeldenummer: 92100788.6
(22) Anmeldetag: 18.01.1992
(51) Int. Cl.: A01D 78/10

(54) **Zweikreiselschwader**
Two-rotor windrower
Andaineuse à deux rotors

(30) Priorität: 06.02.1991 DE 4103507
(43) Veröffentlichungstag der Anmeldung: 12.08.1992
(73) Patentinhaber: CLAAS SAULGAU GMBH, D-88340 Saulgau (DE)
(72) Erfinder: Reber, Erwin, W-7968 Saulgau (DE); Geng, Manfred, W-7968 Saulgau-Bogenweiler (DE)

(56) Entgegenhaltungen:
- CH-A- 418 041
- DE-U- 7 835 320
- DE-U- 7 913 795
- GB-A- 2 095 525

## Beschreibung

Die Erfindung bezieht sich auf Zweikreisel-Schwader, welche zwei, in Fahrtrichtung gestaffelt zueinander angeordnete Schwadkreisel und vorzugsweise ein Fahrgestell mit zwei Laufrädern, von denen eines in dem Zwischenraum zwischen den beiden Schwadkreiseln angeordnet ist. Bei der Arbeit bildet der vorauslaufende Schwadkreisel einen Schwad, der von dem nachlaufenden Schwadkreisel aufgenommen und zusammen mit dem von diesem nachlaufenden Schwadkreisel aufgesammelten Erntegut als Doppelschwad seitlich abgelegt wird.

Die Erfindung bezweckt eine Erweiterung der Funktionsmöglichkeit eines derartigen Schwaders. Und zwar sollen außer einem seitlich abgelegten Doppelschwad auch ein mittig abgelegter Doppelschwad oder zwei Einzelschwaden hergestellt werden können. Darüberhinaus soll es möglich sein, die Maschine wahlweise mit einem dritten Schwadkreisel zu versehen und dabei einen Großschwad abzulegen. Desweiteren soll die Kurvengängigkeit des Schwaders weiter verbessert werden.

Die gewünschten Verbesserungen werden durch eine Ausführung mit den Merkmalen des Anspruchs 1 erzielt, daß mindestens einer der Schwadkreisel so mit dem Fahrgestell verbunden ist, daß er an diesem quer zur Fahrtrichtung verschiebbar oder versetzbar ist. Weitere Merkmale der Erfindung sind in den Unteransprüchen enthalten.

Die Erfindung wird anhand von vier Abbildungen beispielsweise beschrieben:
- Figur 1: zeigt einen Zweikreisel-Schwader in Draufsicht in einer Stellung zur Erzeugung eines seitlich abgelegten Doppelschwades,
- Figur 2: zeigt die Maschine in einer Stellung zur Erzeugung von zwei Einzelschwader,
- Figur 3: zeigt die Maschine in einer Stellung zur Erzeugung eines mittig abgelegten Doppelschwades. Gleichzeitig wird hier die Anordnung eines weiteren Schwadkreisels angedeutet, der entweder zusätzlich oder wahlweise zu anderen Schwadkreiseln eingesetzt werden kann.
- Figur 4: zeigt einen Zweikreisel-Schwader nach Figur 1 in Transportstellung.

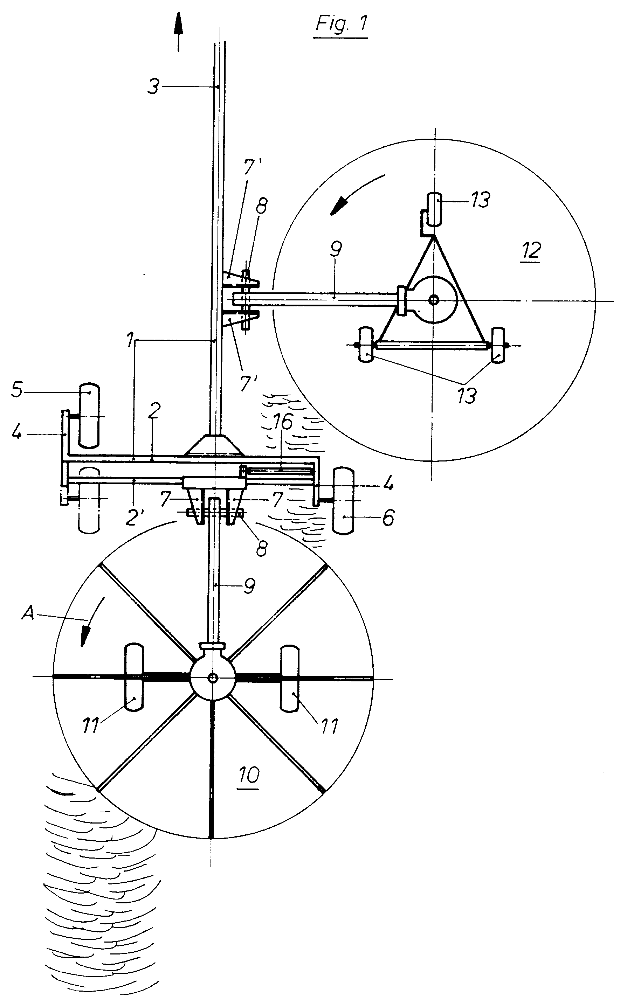

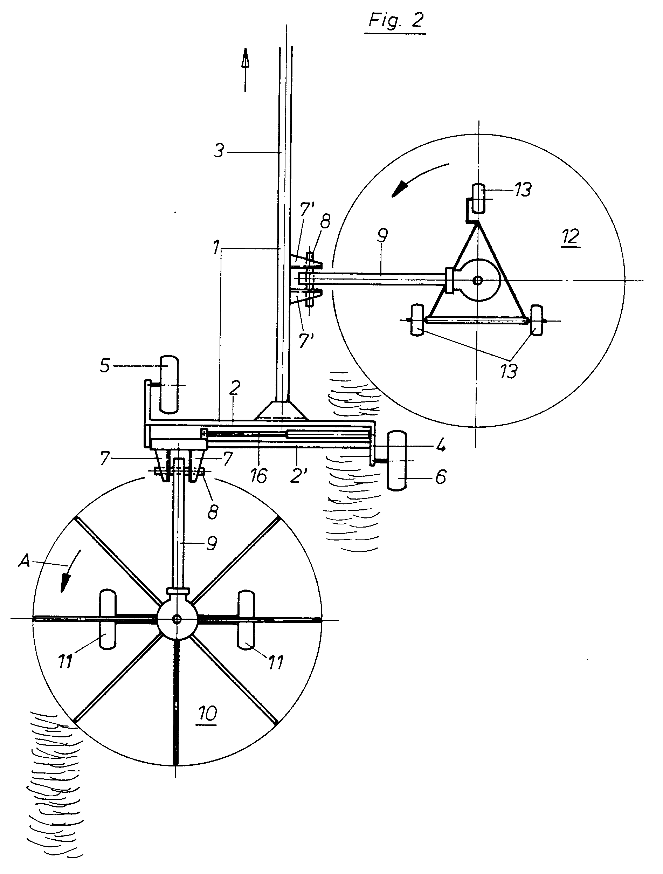

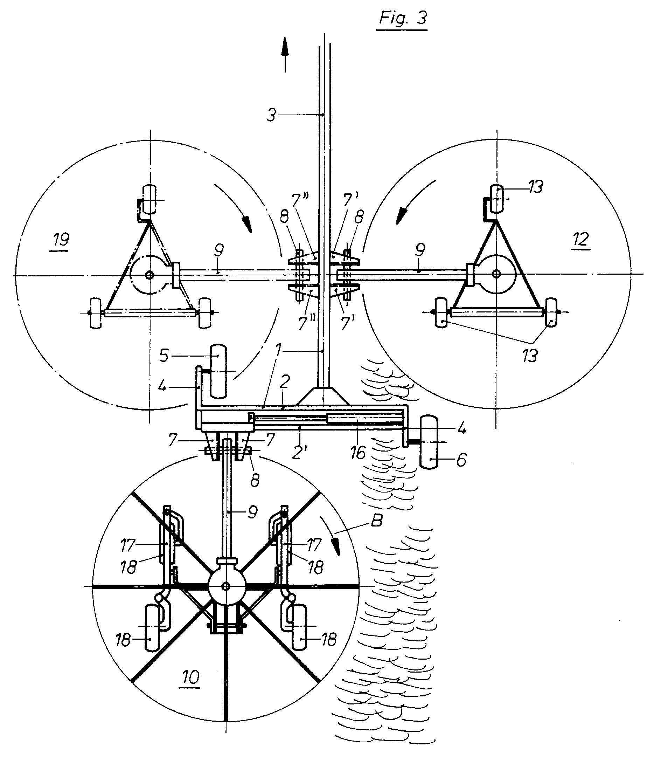

Ein Fahrgestell (1) besteht aus einem Achsträger, der aus einem vorderen Holm (2) und einem hinteren Holm (2') aufgebaut ist, die fest miteinander verbunden sind, einer fest damit verbundenen Deichsel (3), Radträgern (4) und einem linken Laufrad (5) und einem rechten Laufrad (6). Das linke Laufrad (5) kann auch in einer Stellung wie strich-punktiert gezeichnet angeordnet sein (Figur 1). An der Rückseite des hinteren Holmes (2') des Achsträgers sind Lagerstege (7) quer beweglich angebracht. Sie können mittels eines, mit einem Radträger (4) einseitig verbundenen, hydraulischen Hubzylinders (16) auf dem hinteren Holm (2') so verschoben
werden, daß sie eine Stellung wie in Figur 1 oder wie in Figuren 2 und 3 einnehmen. Die Lagerstege (7) nehmen einen Gelenkbolzen (8) auf, der seinerseits einen Tragarm (9) durchsetzt. Am anderen Ende des Tragarmes (9) ist ein nachlaufender Schwadkreisel (10) bekannter Bauart gelagert. Der Schwadkreisel (10) stützt sich auf ein Fahrwerk mit zwei Stützrädern (11) ab (Figuren 1 und 2). Statt auf ein zweirädriges Fahrwerk kann sich der Schwadkreisel auch auf ein an sich bekanntes, vierrädriges Tandemfahrwerk (17) mit Nachlaufrädern (18) abstützen (Figur 3). Eine solche Anordnung verbessert die Kurvengängigkeit der Maschine noch zusätzlich.

An der Deichsel (3) sind Lagerstege (7') befestigt, die einen Gelenkbolzen (8) tragen, der einen Tragarm (9) des vorauslaufenden Schwadkreisels (12) durchsetzt. Der Schwadkreisel (12) stützt sich auf ein Dreirad-Fahrwerk (13) oder gegebenenfalls auch auf ein vierrädriges Tandemfahrwerk mit Nachlaufrädern ab.

Die Schwadkreisel (10, 12) können durch bekannte und deshalb nicht dargestellte Antriebsmittel angetrieben werden. Dabei kann der Schwadkreisel (10) in Richtung des Pfeiles A angetrieben werden (Figuren 1, 2), damit ein seitlich abzulegender Doppelschwad hergestellt wird (Figur 1) oder damit zwei Einfachschwaden abgelegt werden (Figur 2). Durch ein Umkehrgetriebe kann der Schwadkreisel (10) aber auch in Richtung des Pfeiles B angetrieben werden (Figur 3). Es wird dann durch Zusammenwirken der Schwadkreisel (12 und 10) ein mittig abgelegter Doppelschwad hergestellt werden.

Um die Baulänge des Zweikreisel-Schwaders zu verringern oder um eine zusätzliche Arbeitsbreite zu erzielen, kann an weiteren Lagerstegen (7''), die fest mit der Deichsel (3) verbunden sind (Figur 3), ein zusätzlicher Schwadkreisel (19) angeordnet sein. Wenn dabei der Schwadkreisel (10) in Funktion bleibt, entsteht ein seitlich abgelegter Großschwad. Wenn der Schwadkreisel (10) entfernt oder hochgeklappt oder an Stelle des zusätzlichen Schwadkreisels (19) angeordnet wird, entsteht ein mittig abgelegter Doppelschwad.

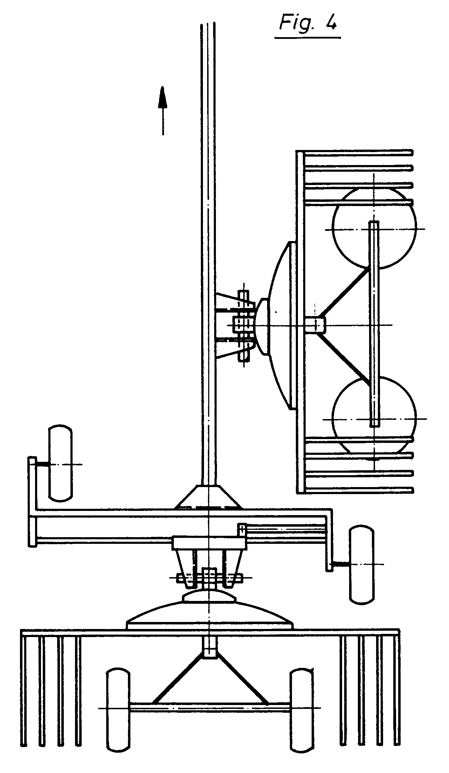

Zum Straßentransport können die Schwadkreisel (10, 12, 19) um die Gelenkbolzen (8) drehend, in eine etwa senkrechte Lage verbracht werden (Figur 4).

## Patentansprüche

1. An einen Schlepper anhängbarer Zweikreisel-Schwader mit zwei, von Laufrädern getragenen Schwadkreiseln, die in Fahrtrichtung gestaffelt zueinander an einem Fahrgestell angeordnet sind, dessen eines Laufrad in dem Zwischenraum zwischen den beiden Schwadkreiseln läuft, wobei mindestens einer der Schwadkreisel (10, 12) so mit dem Fahrgestell (1) verbunden ist, daß er an diesem quer zur Fahrtrichtung verschiebbar oder versetzbar ist.

2. Zweikreisel-Schwader nach Anspruch 1, dadurch gekennzeichnet, daß der nachlaufende Schwadkreisel (10) an Lagerstegen (7) angelenkt ist, die ihrerseits an einem Holm (2') eines Achsträgers (2, 2') querbeweglich verschiebbar sind.

3. Zweikreisel-Schwader nach Anspruch 2, dadurch gekennzeichnet, daß die querbeweglichen Lagerstege (7) mittels eines Hubzylinders (16) verschieb- und festhaltbar sind.

4. Zweikreisel-Schwader nach den Ansprüchen 1 - 3, dadurch gekennzeichnet, daß die Drehrichtung des nachlaufenden Schwadkreisels (10) umkehrbar ist.

5. Zweikreisel-Schwader nach den Ansprüchen 1 - 4, dadurch gekennzeichnet, daß zumindest der nachlaufende Schwadkreisel (10) sich auf ein vier-rädriges Tandemfahrwerk (17) mit Nachlaufrädern (18) abstützt.

6. Zweikreisel-Schwader nach den Ansprüchen 1 - 5, dadurch gekennzeichnet, daß an einer Deichsel (3) des Fahrgestelles (1) Lagerstege (7'') vorgesehen sind, an denen ein zusätzlicher Schwadkreisel (19) oder der sonst nachlaufende Schwadkreisel (10) angelenkt werden können.

7. Zweikreisel-Schwader nach Anspruch (6), dadurch gekennzeichnet, daß bei Verwendung von drei Schwadkreiseln (10, 12, 19) deren Drehrichtung so ist, daß die beiden vorauslaufenden Schwadkreisel (12, 19) einen Doppelschwad bilden, der von dem nachlaufenden Schwadkreisel (10) aufgenommen und seitlich als Großschwad abgelegt wird.

## Claims

1. A twin-rotor windrower which can be connected to a tractor, having two windrowing rotors which are supported by wheels and which are arranged in staggered relationship relative to each other in the direction of travel on a chassis frame of which one wheel runs in the intermediate space between the two windrowing rotors, wherein at least one of the windrowing rotors (10, 12) is so connected to the chassis frame (1) that it is displaceable or slidable thereon transversely to the direction of travel.

2. A twin-rotor windrower according to claim 1 characterised in that the trailing windrowing rotor (10) is pivoted on mounting plates (7) which in turn are transversely movably slidable on a beam (2') of an axle carrier (2, 2').

3. A twin-rotor windrower according to claim 2 characterised in that the transversely movable mounting plates (7) can be slid and secured by means of a stroke cylinder (16).

4. A twin-rotor windrower according to claims 1 to 3 characterised in that the direction of rotation of the trailing windrowing rotor (10) is reversible.

5. A twin-rotor windrower according to claims 1 to 4 characterised in that at least the trailing windrowing rotor (10) is supported on a four-wheel tandem chassis (17) with trailing wheels (18).

6. A twin-rotor windrower according to claims 1 to 5 characterised in that provided on a tow bar (3) of the chassis frame (1) are mounting plates (7'') on which an additional windrowing rotor (19) or the otherwise trailing windrowing rotor (10) can be pivoted.

7. A twin-rotor windrower according to claim 6 characterised in that when using three windrowing rotors (10, 12, 19) the direction of rotation thereof is such that the two leading windrowing rotors (12, 19) form a double windrow which is picked up by the trailing windrowing rotor (10) and deposited laterally as a large windrow.

## Revendications

1. Dans une andaineuse à deux rotors pouvant attelée à un tracteur et comprenant deux rotors d'andainage supportés par des roues et qui sont disposés de façon étagée l'un par rapport à l'autre en direction de la marche sur un châssis de roulement, dont une roue roule dans l'espace intermédiaire compris entre les deux rotors d'andainage, l'un au moins des rotors d'andainage (10, 12) est relié au châssis de roulement (1) de manière qu'il puisse être déplacé ou décalé sur ce dernier transversalement à la direction de la marche.

2. Andaineuse à deux rotors selon la revendication 1, caractérisée en ce que le rotor d'andainage (10) monté en arrière est articulé sur des entretoises de support (7) qui peuvent être déplacées de leur côté transversalement sur un longeron (2') d'un support d'axe (2, 2').

3. Andaineuse à deux rotors selon la revendication 2, caractérisée en ce que les entretoises de support (7) mobiles transversalement peuvent être déplacées et maintenues au moyen d'un vérin (16).

4. Andaineuse à deux rotors selon les revendications 1 à 3, caractérisée en ce que le sens de la rotation du rotor d'andainage monté en arrière (10) peut être inversé.

5. Andaineuse à deux rotors selon les revendications 1 à 4, caractérisée en ce que le rotor d'andainage (10) monté en arrière au moins s'appuie sur un châssis de roulement tandem (17) à quatre roues comprenant des roues suiveuses (18).

6. Andaineuse à deux rotors selon les revendications 1 à 5, caractérisée en ce que sont prévues sur un longeron (3) du châssis de roulement (1) des entretoises de support (7'') sur lesquelles peut être articulé un rotor d'andainage additionnel (19) ou encore le rotor d'andainage (10) monté en arrière.

7. Andaineuse à deux rotors selon la revendication 6, caractérisée en ce que lorsqu'on utilise trois rotors d'andainage (10, 12, 19) dans un sens de rotation tel que les deux rotors d'andainage (12, 19) disposés à l'avant forment un double andain, celui-ci est repris par le rotor d'andainage (10) disposé à la suite et déposé latéralement sous forme d'un andain de grandes dimensions.
